# EUROPEAN PATENT APPLICATION

(11) **EP 4 160 738 A1**
(43) Date of publication of application: **05.04.2023**
(21) Application number: 21812229.9
(22) Date of filing: 20.05.2021
(51) Int. Cl.: H01M 4/38, C01B 33/32, H01M 4/36

(54) **NEGATIVE ELECTRODE ACTIVE SUBSTANCE FOR SECONDARY BATTERY AND SECONDARY BATTERY**

(30) Priority: 29.05.2020 JP 2020095081
(71) Applicant: Panasonic Intellectual Property Management Co., Ltd., Osaka-shi, Osaka 540-6207 (JP)
(72) Inventor: UCHIYAMA, Yohei, Osaka-shi, Osaka 540-6207 (JP); SATO, Yosuke, Osaka-shi, Osaka 540-6207 (JP)
(74) Representative: Novagraaf International SA
(86) International application number: PCT/JP2021/019138
(87) International publication number: WO 2021/241388

(57) **Abstract**

A negative electrode active material for a secondary battery includes a lithium silicate phase, and a silicon phase dispersed in the lithium silicate phase. An electron diffraction image of the negative electrode active material obtained using a transmission electron microscope has a spot image, and an average particle diameter of the negative electrode active material is 8 µm or less.

## Description

### [Technical Field]

The present disclosure relates to a secondary battery, and mainly relates to an improvement of a negative electrode of a non-aqueous electrolyte secondary battery.

### [Background Art]

Non-aqueous electrolyte secondary batteries, especially lithium ion secondary batteries, because of their high voltage and high energy density, have been expected as promising power sources for small consumer applications, power storage devices, and electric cars. With increasing demand for a higher battery energy density, a material containing silicon (Si) that forms an alloy with lithium has been expected to be utilized as a negative electrode active material having a high theoretical capacity density.

Patent Literature 1 proposes to use a negative electrode active material including a lithium silicate phase represented by Li_{2z}SiO_{2+z} where 0 < z < 2, and silicon particles dispersed in the lithium silicate phase, in a non-aqueous electrolyte secondary battery.

### [Citation List]

### [Patent Literature]

Patent Literature 1: International publication WO2016/35290

### [Summary of Invention]

The negative electrode active material disclosed in Patent Literature 1, because of its low irreversible capacity during charging and discharging, as compared to that of a composite material (SiOₓ) in which fine silicon is dispersed in SiO₂ phase, is advantageous in improving the initial charge-discharge efficiency.

However, with development of more sophisticated portable electronic devices and the like, further improvement in the initial charge-discharge efficiency has been required.

In view of the above, one aspect of the present disclosure relates to a negative electrode active material for a secondary battery, including: a lithium silicate phase; and a silicon phase dispersed in the lithium silicate phase, wherein an electron diffraction image of the negative electrode active material obtained using a transmission electron microscope has a spot image, and an average particle diameter of the negative electrode active material is 8 µm or less.

Another aspect of the present disclosure relates to a secondary battery, including: a positive electrode; a negative electrode; and an electrolyte, wherein the negative electrode includes the above-described negative electrode active material for a secondary battery.

According to the present disclosure, the initial charge-discharge efficiency of a secondary battery can be improved.

### [Brief Description of Drawings]

[FIG. 1] A schematic cross-sectional view of a negative electrode material according to one embodiment of the present disclosure.
[FIG. 2] A schematic cross-sectional view of the negative electrode active material after subjected to charging and discharging several times.
[FIG. 3] A partially cut-away schematic oblique view of a secondary battery according to one embodiment of the present disclosure.
[FIG. 4A]An example of an electron diffraction image obtained using a transmission electron microscope, for a negative electrode active material of the present embodiment.
[FIG. 4B]An example of an electron diffraction image obtained using a transmission electron microscope, for a conventional negative electrode active material.

### [Description of Embodiments]

### [Negative electrode active material for secondary battery]

A negative electrode active material for a secondary battery according to an embodiment of the present disclosure (hereinafter sometimes simply referred to as a "negative electrode active material" or "composite particles") includes a lithium silicate phase and a silicon phase dispersed in the lithium silicate phase, and an electron diffraction image of the negative electrode active material obtained using a transmission electron microscope has a spot image. Furthermore, an average particle diameter of the negative electrode active material is 8 µm or less.

It has been known that a negative electrode active material including a lithium silicate phase and silicon particles dispersed in the lithium silicate phase, during charging and discharging, undergoes severe expansion and contraction of the silicon particles due to absorption and release of lithium. Therefore, along with expansion and contraction of the silicon particles, a large stress is generated in the lithium silicate phase present around the silicon particles, to cause a crack or break in the composite particle. In association therewith, the bonding strength between the composite particle and the binder therearound is weakened, and the cracked composite particle may lose its electrically conductive path with the surrounding particles and become isolated in some cases. Moreover, side reactions between the liquid electrolyte and the silicon particles are accelerated. As a result, the charge-discharge cycle characteristics may deteriorate.

However, according to the negative electrode active material of the present embodiment, by reducing the average particle diameter of the negative electrode active material to 8 µm or less, the precipitation of microcrystals in the low-crystalline or amorphous lithium silicate phase can be facilitated in a heat treatment process. This can enhance the strength of the lithium silicate phase, and suppress the occurrence of a crack or break due to expansion and contraction during charging and discharging. Furthermore, the lithium silicate phase has a high crystallinity on a micro level. Therefore, the sites that may react with lithium ions in the lithium silicate phase decrease, and the irreversible capacity decreases. In addition, by applying sufficient heat treatment to the composite particles, the porosity inside the composite particles can be easily reduced, and side reactions between the liquid electrolyte and the silicon particles can also be suppressed. As a result of these, the high capacity can be maintained even after charge-discharge cycles are repeated many times.

The average particle diameter of the negative electrode active material may be 3 µm or more. In this case, the surface area of the negative electrode active material also becomes appropriate, and the decrease in capacity due to side reactions with the non-aqueous electrolyte can be suppressed.

The average particle diameter of the negative electrode active material may be 6 µm or less. In this case, the crystallinity of the lithium silicate phase is further enhanced, the irreversible capacity is significantly reduced, and the cycle characteristics are remarkably improved.

Furthermore, when metal fine particles are dispersed in the negative electrode active material, the metal, which is an elastic body, can relax the expansion and contraction, leading to improved cycle characteristics. Preferable examples of the metal element contained in the metal fine particles include iron, chromium, nickel, and aluminum, of which iron is most preferable. The metal fine particles may be an alloy of these metal elements. The average particle diameter of the metal fine particles is preferably 2 nm to 100 nm. When the average particle diameter is less than 2 nm, the metal fine particles tend to be alloyed with silicon, causing a decrease in capacity in some cases. On the other hand, when the average particle diameter exceeds 100 nm, the metal fine particles tend to become a starting point of a crack and the like, leading to a decrease in the cycle retention rate in some cases. Moreover, when the number of the metal fine particles dispersed in the negative electrode active material is 10 to 1000/µm², the cycle retention rate tends to improve. When the number is less than 10/µm², the expansion and contraction relaxing effect is difficult to obtain, and when the number exceeds 1000/µm², the silicon alloy formation becomes unneglectable, resulting in a decrease in capacity.

The average particle diameter of the negative electrode active material means a particle diameter at 50% cumulative volume (volume average particle diameter) in a particle diameter distribution measured by a laser diffraction and scattering method. As the measuring apparatus, for example, "LA-750", available from Horiba, Ltd. (HORIBA) can be used.

In the negative electrode active material of the present embodiment, the silicon phase has a large crystallite size. In addition, the lithium silicate phase has a mixed structure of amorphous and crystals, in which fine crystals are dispersed in amorphous lithium silicate. The amorphous lithium silicate phase contributes to relaxing the expansion and contraction and ensuring the lithium ion conductivity, while the crystalline lithium silicate phase, the reactivity of which with lithium ions is low, contributes to efficiency improvement and the like.

Therefore, with respect to the negative electrode active material in a state immediately after production or in a discharged state after charge-discharge cycle is repeated several times, when electron diffraction is performed on one particle of the negative electrode active material using a transmission electron microscope, a spot attributed to the lithium silicate phase and/or the silicon phase appears in the electron diffraction image. The distance from the center of the spot corresponds to the interplanar spacing of the crystal of the lithium silicate phase and/or the silicon phase. In contrast, when the crystallinity of the lithium silicate phase and/or the silicon phase is low, a concentric circular pattern in which the distance from the center (radius) corresponds to the interplanar spacing appears in the diffraction image. When the lithium silicate phase is completely amorphous, no diffraction pattern belonging to the lithium silicate phase appears.

In the electron diffraction image, whether the diffraction pattern will be ring-shaped or spot-shaped depends on the magnitude relationship between the crystallite size of the sample and the beam width of the electron beam to be irradiated. When the crystallite size is equal to or larger than the beam width, due to the limited number of the crystallites that contribute to the diffraction, discrete and large diffraction spots will be observed. On the other hand, when the crystallite size is sufficiently small relative to the beam width, as a result of overlapping of small diffraction spots from many crystallites, a continuous ring-shaped diffraction image will be observed.

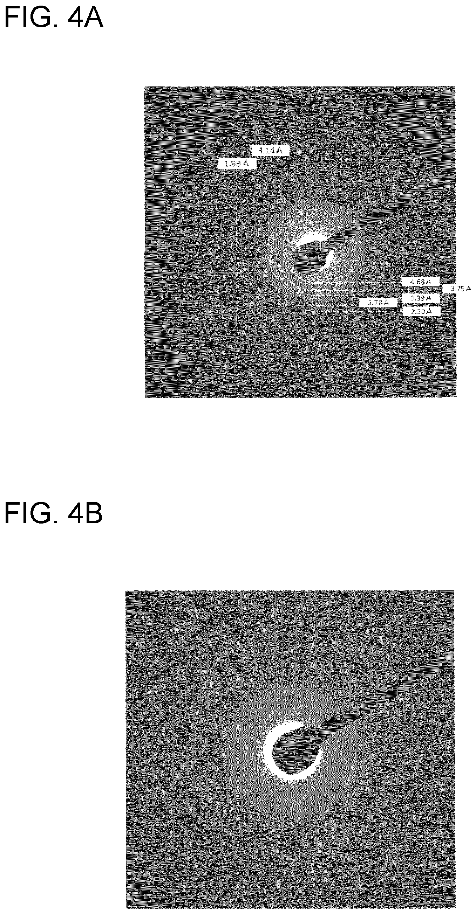

FIGS. 4A and 4B show examples of the electron diffraction image of the negative electrode active material acquired using a transmission electron microscope. FIG. 4A is an electron diffraction image of the negative electrode active material of the present embodiment. FIG. 4B is an electron diffraction image of a conventional negative electrode active material. In FIG. 4A, spots attributed to the lithium silicate phase and the silicon phase are observed. In FIG. 4A, the spot present at the position corresponding to the interplanar spacing of 2.78 Å is considered to belong to the (130) plane or (200) plane of Li₂SiO₃. The spot present at around the position corresponding to the interplanar spacing of 2.50 Å is considered to belong to the (002) plane of Li₂Si₂O₅. Also, at the positions corresponding to the interplanar spacings of 1.93 Å and 3.14 Å, spots belonging to the (220) plane and the (111) plane of Si are observed, respectively. On the other hand, in FIG. 4B, a ring-shaped diffraction image attributed to the silicon phase is observed, but no diffraction image attributed to the lithium silicate phase is observed.

The microcrystals within the lithium silicate phase, which are subjected to physical and/or chemical action during charging and discharging, are prone to change into amorphous state. The spots will therefore change into a ring shape with increasing the number of charge-discharge cycles. Hence, by observing the negative electrode active material after a small number of charge-discharge cycles, the spots can be clearly confirmed. Note that, in the diffraction image, it suffices when a spot image is observed, and even when a spot image and a ring-shaped diffraction image are mixed, there is no difference in the battery characteristics from those when spots alone are observed.

An example of desirable measurement conditions for electron diffractometry using a transmission electron microscope is shown below.

Electron diffraction method: Selected area electron diffraction
Selected area aperture region: 200 nmΦ
Sample thickness: 60 to 80 nm
Accelerating voltage: 200 kV

The spot diameter of the spot image in the electron diffraction image is determined from the width (full width at half maximum) of a region R having an intensity of 50% or more of the maximum intensity of the spot image. When the position of the region R in the diffraction image is expressed in two-dimensional polar coordinates, with the origin being the position where the non-diffracted light of the electron beam is incident, the width of the region R in the angular direction (circumferential direction) and the width of the region R in the radial direction are determined. A difference ΔΦ between the polar angles Φ at both ends in the angular direction of the region R is determined. In the spot image, ΔΦ is, for example, 7° or less.

The negative electrode active material is produced by mixing lithium silicate particles and silicon particles, and forming the mixture into a composite by, for example, crushing and sintering. In the state immediately after production, the negative electrode active material (composite particles) has a sea-island structure in which silicon particles (silicon phase) dispersed as islands in the sea of a lithium silicate phase. However, when charging and discharging are repeated several times, adjacent silicon particles are connected to each other via the silicon phase, resulting in the silicon phase formed in a three-dimensional network shape. The reason for this is presumably as follows. During charging, the silicon particles located at the outermost surface of the negative electrode active material expand in volume due to absorption of lithium ions and communicate with adjacent silicon particles, and then, further, the adjacent silicon particles expand in volume due to absorption of lithium ions and communicate with other silicon particles. In this way, the entire silicon particles are alloyed into a lithium silicide formed like a network. Thereafter, the lithium ions are released during discharging, and the regions between the adjacent silicon particles change to a silicon phase. As a result, the silicon phase is connected one after another, leading to enhanced lithium ion conductivity and electron conductivity, and thus, the initial efficiency and the cycle retention rate can be improved.

With decreasing the average particle diameter of the silicon particles to be dispersed in the lithium silicate phase, the number of particles per mass of the silicon particles increases, and the distance between the silicon particles dispersed in the lithium silicate phase becomes shorter. Therefore, adjacent silicon particles tend to be joined to each other during charging and discharging, and the silicon phase tends to be formed in a network shape. The average particle diameter of the silicon particles is preferably 50 nm or less before the first charging, from the point that the distance between the silicon particles dispersed in the lithium silicate phase becomes sufficiently short, and the silicon phase can be easily formed in a network shape.

Moreover, since the silicon phase is dispersed in the silicate phase, the expansion and contraction of the composite particles associated with charging and discharging can be suppressed. In view of suppressing the cracking of the silicon phase, the average particle diameter of the silicon particles is, before the first charging, preferably 500 nm or less, more preferably 200 nm or less, still more preferably 50 nm or less. By using finer silicon particles, the changes in volume due to charging and discharging are reduced, and the structural stability of the composite particles can be further improved.

The average particle diameter of the silicon particles is measured by observing a cross-sectional SEM image of the composite particle. Specifically, the average particle diameter of the silicon particles is determined by averaging the maximum diameters of any 100 silicon particles, and/or, in the silicon phase formed in a network shape, the maximum diameters in the portions excluding the areas joining adjacent silicon particles.

The content of the silicon phase in the negative electrode active material is preferably 50 mass% or more. In this case, the silicon phase is likely to be formed in a network shape, and a high energy density tends to be obtained. In addition, the diffusibility of lithium ions is favorable, and excellent load characteristics tend to be obtained. On the other hand, in view of improving the cycle characteristics, the content of the silicon phase in the negative electrode active material is preferably 95 mass% or less, more preferably 75 mass% or less, further more preferably 70 mass% or less. In this case, the exposed surface area of the silicon particles without being covered with lithium silicate phase decreases, and the reaction between the electrolyte and the silicon particles tends to be suppressed.

It is to be noted that in a state where the silicon phase is formed in a network shape through charging and discharging, the content of the silicon phase in the negative electrode active material, due to the influence such as oxidation of silicon particles, may slightly decrease from the content of the silicon particles in the negative electrode active material before charging and discharging. The content of the silicon phase in the negative electrode active material can be, for example, 80% or more or 90% or more, relative to the content of the silicon particles in the negative electrode active material before charging and discharging.

The lithium silicate phase contains lithium (Li), silicon (Si), and oxygen (O). The atomic ratio O/Si of O to Si in the lithium silicate phase is, for example, greater than 2 and less than 4. When the O/Si is greater than 2 and less than 4 (z in the below-described formula satisfies 0 < z < 2), it is advantageous in the stability and the lithium ion conductivity. The O/Si is preferably greater than 2 and less than 3 (z in the below-described formula satisfies 0 < z < 1). The atomic ratio Li/Si of Li to Si in the lithium silicate phase is, for example, greater than 0 and less than 4.

The lithium silicate phase can have a composition represented by a formula: Li_{2z}SiO_{2+z} where 0 < z < 2. In view of the stability, the ease of production, and the lithium ion conductivity, z preferably satisfies 0 < z < 1, and z = 1/2 is more preferred.

The lithium silicate phase may contain another element other than lithium (Li), silicon (Si), and oxygen (O). The other element may be a rare-earth element as described later.

The composition of the lithium silicate phase in the composite particles can be analyzed, for example, in the following manner.

The battery is disassembled, to take out the negative electrode, which is then washed with a non-aqueous solvent, such as ethylene carbonate, and dried. This is followed by processing with a cross section polisher (CP) to obtain a cross section of the negative electrode mixture layer, thereby to prepare a sample. A field emission scanning electron microscope (FE-SEM) is used to give a reflected electron image of a sample cross section, to observe the cross section of a composite particle. Then, an Auger electron spectroscopy (AES) analyzer (JAMP-9510F, available from JEOL Corporation) is used to perform a qualitative/quantitative analysis of elements in the silicate phase of the observed composite particle (acceleration voltage: 10 kV, beam current: 10 nA, analysis region: 20 µmφ). The composition of the silicate phase is determined, for example, based on the obtained contents of lithium (Li), silicon (Si), oxygen (O), and other elements. The quantity of each element in the composite particle in a discharged state can be determined by energy-dispersive X-ray spectroscopy (EDX), electron microanalyzer (EPMA), laser ablation ICP mass spectrometry (LA-ICP-MS), X-ray photoelectron spectroscopy (XPS), or the like.

In the above cross-section observation and analysis of the sample, in order to prevent the diffusion of Li, a carbon specimen support can be used for fixing the sample. In order to prevent the quality alteration of the sample cross section, a transfer vessel that holds and conveys a sample without exposing the sample to atmosphere can be used.

In the composite particle, the lithium silicate phase and the silicon phase are present. These phases can be distinguished and quantified by Si-NMR. Desirable Si-NMR measurement conditions are shown below.

Measuring apparatus: Solid nuclear magnetic resonance spectrometer (INOVA-400), available from Varian, Inc.
Probe: Varian 7 mm CPMAS-2
MAS: 4.2 kHz
MAS speed: 4 kHz
Pulse: DD (45° pulse + signal capture time 1H decoupling)
Repetition time: 1200 sec
Observation width: 100 kHz
Observation center: around -100 ppm
Signal capture time: 0.05 sec
Number of times of accumulation: 560
Sample amount: 207.6 mg

For a standard substance necessary for quantification, a mixture containing a silicate phase whose Si content is already known and silicon particles in a predetermined ratio is used.

The negative electrode active material may contain an element other than lithium (Li), silicon (Si), and oxygen (O). For example, the negative electrode active material may contain a rare-earth element M. The rare-earth element M can be contained in the negative electrode active material, in the form of a silicate of the rare-earth element M. Preferred as the silicate of the rare-earth element M is La₂Si₂O₇.

The rare-earth element M can be contained in the negative electrode active material, in the form of a crystalline phase of a silicate containing a rare-earth element, silicon (Si), and oxygen (O). The crystalline phase can be present in a dispersed state in the lithium silicate phase.

By dispersing the crystalline phase containing the above rare-earth element, which is low in reactivity with lithium ions, in the matrix of the lithium silicate phase, the sites that may react with lithium ions in the lithium silicate phase are reduced, and the irreversible capacity is reduced, leading to enhanced initial charge-discharge efficiency. In order to disperse the crystalline phase in the matrix of the lithium silicate phase, the crystalline phase may be formed in the silicate phase in the course of producing a negative electrode active material. In this case, the sites that may react with lithium ions can be reduced more efficiently.

The rare-earth element M preferably includes at least one selected from the group consisting of lanthanum (La), cerium (Ce), praseodymium (Pr), and neodymium (Nd). In view of improving the lithium ion conductivity, in particular, the rare-earth element more preferably includes La. The proportion of La in the whole rare-earth element is preferably 90 atom% or more and 100 atom% or less.

A higher crystallinity of the silicate of the rare-earth element M is more desirable. In this case, the reactivity with ions, such as lithium ions, of the crystalline phase is further reduced, and as a result, the resistance during discharging is reduced, and the initial charge-discharge efficiency improves. When the silicate of the rare-earth element has high crystallinity, in an X-ray diffraction pattern of the composite particle obtained by X-ray diffractometry using Cu-Kα rays, a diffraction peak is observed, for example, near the diffraction angle 2θ = 33°.

The crystalline phase can have a composition represented by, for example, a general formula: M₂O₃·ySiO₂. The symbol y is, for example, 1.0 to 2.0. The crystalline phase preferably includes a compound A represented by a general formula: M₂Si₂O₇ where M is a rare-earth element because it is highly stable in structure, and hardly leaches out into liquid electrolyte. In particular, La₂Si₂O₇ is more preferred because it can be stably present without changing its structure even during charging and discharging.

The content of the rare-earth element in the negative electrode active material is preferably 0.2 mass% or more and 21 mass% or less, more preferably 2.4 mass% or more and 15 mass% or less, further more preferably 5.5 mass % or more and 14 mass % or less, relative to the total amount of the elements other than oxygen. When the content of the rare-earth element is 0.2 mass% or more, relative to the total amount of the elements other than oxygen, the reactivity with lithium ions is lowered, and the initial charge-discharge efficiency improvement effect tends to be obtained. When the content of the rare-earth element is 21 mass% or less, relative to the total amount of the elements other than oxygen, a certain amount or more of amorphous portion is secured within the lithium silicate phase, and the lithium ion conductivity tends to improve.

The content of the rare-earth element in the negative electrode active material can be determined, for example, by the following matter.

The battery is disassembled, to take out the negative electrode, which is then washed with a non-aqueous solvent, such as ethylene carbonate, and dried. This is followed by processing with a cross section polisher (CP) to obtain a cross section of the negative electrode mixture layer, thereby to prepare a sample. A field emission scanning electron microscope (FE-SEM) is used to give a reflected electron image of a sample cross section, to observe the cross section of a composite particle. Then, an Auger electron spectroscopy (AES) analyzer (JAMP-9510F, available from JEOL Corporation) is used to perform a qualitative/quantitative analysis of elements in a certain region at the center of the cross section of the observed composite particle (acceleration voltage: 10 kV, beam current: 10 nA, analysis region: 20 µmφ). On the basis of the result of the analysis, the content of the rare-earth element in the composite material particle (the ratio of the mass of the rare-earth element to the total mass of the elements other than oxygen contained in the composite material particle) is determined. The observed 10 composite material particles are analyzed to obtain an average of the rare-earth element contents.

That the crystalline phase containing a rare-earth element, silicon and oxygen are dispersed in the matrix of the lithium silicate phase can be confirmed by observing a cross-sectional image (reflected electron image) of the composite particle obtained using a scanning electron microscope (SEM) or a transmission electron microscope (TEM). The crystalline phase dispersed in the silicate phase have a circle equivalent diameter of, for example, 10 nm or more and 1 µm or less. The circle equivalent diameter of the crystalline phase can be determined from a cross-sectional image (reflected electron image) of the composite particle obtained using a SEM or TEM. Specifically, the circle equivalent diameter can be determined by converting the areas of 100 crystalline phases into diameters of equivalent circles, and averaging them.

The crystalline phase containing a rare-earth element, silicon, and oxygen can be confirmed by an X-ray diffractometry using Cu-Kα radiation.

The crystalline phase containing a rare-earth element, silicon, and oxygen may also be confirmed by electron diffractometry using a field emission transmission electron microscope (JEM2100F, available from JEOL Corporation, acceleration voltage: 200 kV, acceleration current: 110 µA). The interplanar spacing and the crystal structure belonging to the compound A can be obtained on the basis of the diffraction point data (the distance from the center point) obtained by electron diffractometry. The composition of the crystalline phase can be identified on the basis of the obtained interplanar spacing and crystal structure and the elements contained in the crystalline phase obtained by energy dispersive X-ray analysis (EDX).

The lithium silicate phase may further contain an element E1 other than lithium. The element E1 may include at least one of an alkali metal element (except lithium) and a Group II element in the long periodic table. The element E1 may be used singly or in combination of two or more kinds.

When the lithium silicate phase contains an alkali metal element other than Li, crystallization is unlikely to occur, the viscosity in the softened state is reduced, and the fluidity is increased. Therefore, even in a heat treatment at a low temperature, the gaps between the silicon particles can be easily filled, and dense composite particles tend to be produced. The alkali metal element may be at least one of potassium (K) and sodium (Na), because of their inexpensive price. The atomic ratio X/Li of an alkaline element X (e.g., K) other than Li contained in the lithium silicate phase to Li is, for example, 0.01 or more and 1 or less, may be 0.01 or more and 0.8 or less, and may be 0.01 or more and 0.2 or less.

Furthermore, although the silicate phase typically exhibits alkalinity, the Group II element can act to suppress the leaching of the alkali metal from the silicate phase. Therefore, in preparing a slurry containing the negative electrode active material, the viscosity of the slurry tends to be stabilized. This reduces the necessity of treatment (e.g., acid treatment) for neutralizing the alkaline component in the negative electrode active material particles.

The Group II element may be at least one selected from the group consisting of magnesium (Mg), calcium (Ca), and barium (Ba). Among them, Ca is preferred in improving the Vickers hardness of the lithium silicate phase and further improving the cycle characteristics. The content of the Group II element is, for example, 20 mol% or less, may be 15 mol% or less, and may be 10 mol% or less, relative to the total amount of the elements other than O (oxygen) contained in the lithium silicate phase.

The silicate phase may further contain an element E2. The element E2 can include zirconium (Zr), niobium (Nb), tantalum (Ta), vanadium (V), titanium (Ti), phosphorus (P), bismuth (Bi), zinc (Zn), tin (Sn), lead (Pb), antimony (Sb), cobalt (Co), fluorine (F), tungsten (W), aluminum (Al), boron (B), and the like. The element E2 may be used singly or in combination of two or more kinds. When the silicate phase contains the element E2, the chemical stability, lithium ion conductivity, and the like of the composite particles can be improved. Furthermore, the side reaction due to a contact between the silicate phase and the non-aqueous electrolyte can be suppressed. In view of the chemical resistance to liquid electrolyte and structural stability, the element E2 is preferably at least one selected from the group consisting of Zr, Ti, P, Al, and B. The element E2 may be forming a compound. The compound may be, for example, a silicate of the element E2 or an oxide of the element E2, depending on the kind of the element E2.

The silicate phase may further contain a small amount of another element, such as iron (Fe), chromium (Cr), nickel (Ni), manganese (Mn), copper (Cu), and molybdenum (Mo).

At least part of the surface of the composite particles may be covered with an electrically conductive layer. This enhances the conductivity of the composite particles. The conductive layer is preferably thin enough not to substantially influence the average diameter of the composite particles. The conductive layer has a thickness of preferably 1 to 200 nm, more preferably 5 to 100 nm, for securing the electrical conductivity and allowing for diffusion of lithium ions. The thickness of the conductive layer can be measured by cross-section observation of the composite particle using a SEM or TEM.

### [Method for producing negative electrode material]

The method for producing a negative electrode material includes, for example, a first step of obtaining a lithium silicate, a second step of forming the lithium silicate and raw material silicon into a composite, to obtain a composite intermediate including a lithium silicate phase and silicon particles dispersed therein, and a third step of heat-treating the composite intermediate, to obtain composite particles in which the crystallinity of the lithium silicate phase and the silicon particles has been enhanced. In the second step, the composite intermediate has an average particle diameter of 3 µm to 8 µm.

### [First step]

The first step includes, for example, a step 1a of mixing a raw material containing Si, and a Li raw material, to obtain a mixture, and a step 1b of heating the mixture, to obtain a lithium silicate. As the Si raw material, silicon oxide can be used. Examples of the Li raw material that can be used include lithium carbonate, lithium oxide, lithium hydroxide, and lithium hydride. These may be used singly or in combination of two or more kinds. The raw material mixture may include a compound containing the element E1, and/or, the rare-earth element M as mentioned above. The baking in the step 1b is performed, for example, in an oxidizing atmosphere. The baking temperature in the step 1b is preferably 400 °C or higher and 1200 °C or lower, more preferably 800 °C or higher and 1100 °C or lower.

For example, a mixture of the above raw materials is allowed to melt, and the melt is passed between metal rolls and formed into flakes, to prepare a lithium silicate. Then, the flakes of the silicate are heat-treated at a temperature equal to or higher than the glass transition point and lower than the melting point in an air atmosphere, so that the flakes are crystallized. Note that the flakes of the silicate can be used without being crystallized. Also, the silicate can be produced, without allowing the mixture mixed in predetermined amounts to melt, by baking it at a temperature lower than the melting point, to proceed solid phase reaction.

Examples of the compound containing the element E1 include carbonates, oxides, hydroxides, and hydrides of the element E1. The compound containing the element E1 may be used singly or in combination of two or more kinds.

Examples of the compound containing the rare-earth element M include oxides, oxalates, nitrates, sulfates, halides, and carbonates of the rare-earth element. For example, a lanthanum compound may be lanthanum oxide. The compound containing a rare-earth element may be used singly or in combination of two or more kinds.

### [Second step]

In the second step, the lithium silicate is blended with raw material silicon, to be formed into a composite. As the raw material silicon, coarse-grained silicon particles of about several µm to several tens of µm in average particle diameter can be used. The finally obtained silicon particles are preferably controlled such that the crystallite size calculated by using the Scherrer formula from the half width of a diffraction peak belonging to the Si (111) plane in an X-ray diffraction pattern is 10 nm or more.

The second step includes, for example, a step 2a of pulverizing a mixture of the lithium silicate and raw material silicon while applying a shearing force to the mixture, to obtain a fine-grained mixture, and a step 2b of baking the fine-grained mixture to obtain a composite intermediate.

In the step 2a, for example, raw material silicate and raw material silicon are mixed in a predetermined mass ratio, and the mixture is stirred while being pulverized into fine particles, using a pulverizer like a ball mill. An organic solvent may be added to the mixture, to perform wet pulverization. A predetermined amount of an organic solvent may be fed all at once into a milling container at the beginning of the pulverization, or may be fed dividedly in a plurality of times into a milling container in the course of pulverization. The organic solvent serves to prevent an object to be pulverized from adhering onto the inner wall of the milling container. As the organic solvent, an alcohol, an ether, a fatty acid, an alkane, a cycloalkane, a silicate ester, a metal alkoxide, and the like can be used.

Note that the raw material silicon and the lithium silicate may be pulverized separately into fine particles, and then mixed together. Alternatively, without using a pulverizer, silicon nanoparticles and amorphous lithium silicate nanoparticles may be prepared, and mixed together. These nanoparticles can be prepared by any known method, such as a gas phase method (e.g., plasma method) or a liquid phase method (e.g., liquid phase reduction method).

In the step 2b, the mixture may be baked while applying pressure thereto with a hot press or the like, to produce a sintered body of the mixture (composite intermediate). The sintered body may then be pulverized to be a particulate material, which can be used as particles of the composite intermediate. At this time, by appropriately selecting the pulverization conditions, particles of the composite intermediate having an average particle diameter of 3 to 8 µm are obtained.

The baking in the step 2b is performed, for example, in an inert atmosphere (e.g., an atmosphere of argon, nitrogen, etc.). The baking temperature in the step 2b is preferably 450 °C or higher and 1000 °C or lower. The lithium silicate is stable within the temperature range as above, and hardly reacts with silicon. Therefore, a decrease in capacity, if any, is very small.

In the first step or the second step, a compound containing the element E2 may be further added. Examples of the compound containing the element E2 include oxides, oxalates, nitrates, sulfates, halides, and carbonates of the element E2. In particular, oxides are preferred because of their stability and favorable ion conductivity. The compound containing the element E2 may be used singly or in combination of two or more kinds.

### [Third step]

In the third step, the composite intermediate is subjected to a predetermined heat treatment. This improves the crystallinity of the lithium silicate phase and the silicon particles. When the composite intermediate contains a rare-earth element, the crystallinity of the silicate of the rare-earth element dispersed in the silicate phase is also improved. Since the rare-earth element is forming an ionic bond by severing the silicate backbone, a rare-earth silicate with stable crystallinity can be easily formed by the heat treatment.

The heat treatment temperature is preferably 550 °C or higher and 900 °C or lower, more preferably 650 °C or higher and 850 °C or lower. When the heat treatment temperature is 550 °C or higher, crystalline phases of a lithium silicate and a crystalline rare-earth element silicate can be easily formed. However, when the heat treatment temperature exceeds 900 °C, the silicon particles may become huge due to crystal growth, leading to localized expansion and contraction, which may cause the cycle retention rate to decrease. On the other hand, when the heat treatment temperature is lower than 550 °C, lithium silicate crystals precipitated in the amorphous lithium silicate cannot be sufficiently obtained, leaving the majority to be amorphous lithium silicate. Thus, the reactivity with lithium ions may increases, causing a reduction in efficiency. The heat treatment time is, for example, 1 hour or more and 10 hours or less. The heat treatment is preferably performed in an inert atmosphere.

### [Fourth step]

The method for producing a negative electrode material may further include a fourth step of forming a conductive layer containing a conductive material, on at least part of the surface of the composite particles. The conductive material is preferably electrochemically stable, and is preferably a carbon material. As a method of forming a conductive layer on the surface of the composite particles, the composite particles may be mixed with coal pitch, petroleum pitch, phenol resin, or the like, and then heated and carbonized. The above heating performed for carbonization may also serve as the heat treatment in the third step. Alternatively, using a hydrocarbon gas, such as acetylene or methane, as a raw material, a conductive layer containing a carbon material may be formed on the surface of the composite particles by CVD method. Carbon black may be attached to the surface of the composite particles.

### [Fifth step]

The method for producing a negative electrode material may further include a fifth step of washing the composite particles with an acid. For example, washing the composite particles containing lithium silicate with an acidic aqueous solution can dissolve and remove a very small amount of a component like Li₂SiO₃ which may have been produced in the process of forming a composite of the raw material silicon and the lithium silicate. Examples of the acidic aqueous solution include: an aqueous solution of an inorganic acid, such as hydrochloric acid, hydrofluoric acid, sulfuric acid, nitric acid, phosphoric acid, and carbonic acid; and an aqueous solution of an organic acid, such as citric acid and acetic acid.

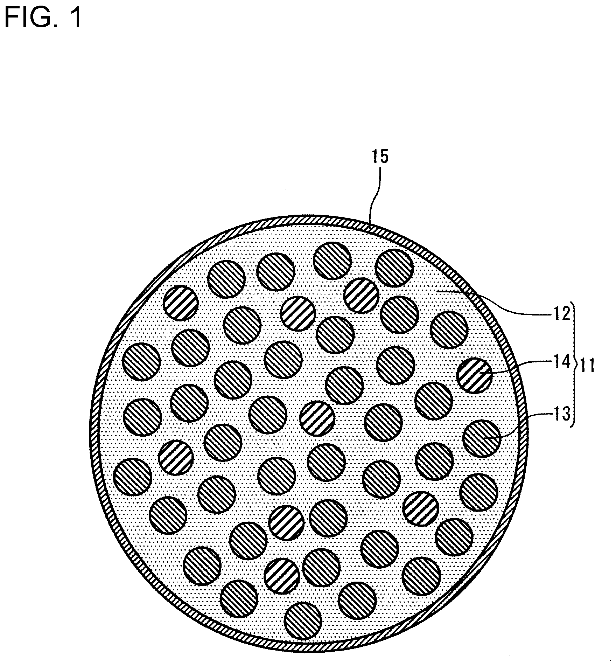

In the following, an example of a negative electrode active material for a secondary battery according to one embodiment of the present disclosure will be described with reference to FIG. 1. FIG. 1 is a schematic cross-sectional view of a negative electrode material (a composite particle 11).

The composite particle 11 is particulate, and includes a lithium silicate phase 12 and silicon (elementary Si) particles 13 dispersed in the lithium silicate phase 12. The composite particles 11 may also include crystalline phases 14 of a rare-earth element silicate dispersed in the lithium silicate phase 12. As illustrated in FIG. 1, at least part of the surface of the composite particle 11 may be covered with a conductive layer 15 containing a conductive material.

The composite particle 11 has, for example, a sea-island structure, and in an arbitrary cross section, the fine silicon particles 13 and the crystalline phases 14 are substantially uniformly scattered in a matrix of the lithium silicate phase 12. Many of the crystalline phases 14 are larger in size than the silicon particles 13.

The silicate phase 12 may further contain the element E2. Also, the silicate phase 12 may slightly contain SiO₂ like a natural oxide film formed on the surface of the silicon particles.

The composite particle 11 may include another component, in addition to the lithium silicate phase 12, the silicon particles 13, and the crystalline phases 14. For example, in view of improving the strength of the composite particle 11, an oxide such as ZrO₂, or a reinforcing material such as a carbide may be contained in an amount up to less than 10 mass%, relative to the composite particles.

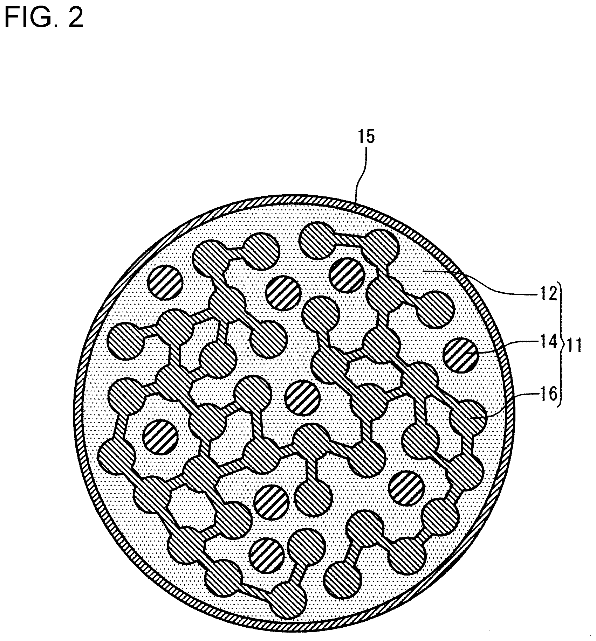

FIG. 2 is a schematic cross-sectional view of the composite particle 11 in a battery assembled using the composite particles 11 as a negative electrode active material, after subjected to charging and discharging several times. Through charging and discharging, the adjacent silicon particles 13 in FIG. 1 are joined with each other, to form a silicon phase 16 in a network shape.

### [Secondary battery]

A secondary battery according to an embodiment of the present disclosure includes a positive electrode, a negative electrode, and a non-aqueous electrolyte, and the negative electrode includes the above-described negative electrode active material (composite particles).

In the following, the secondary battery will be described in detail using a lithium ion secondary battery as an example.

### [Negative electrode]

The negative electrode may include a negative electrode current collector, and a negative electrode mixture layer supported on a surface of the negative electrode current collector. The negative electrode mixture layer can be formed by applying a negative electrode slurry of a negative electrode mixture dispersed in a dispersion medium, onto a surface of the negative electrode current collector, followed by drying. The applied film after drying may be rolled as needed. The negative electrode mixture layer may be formed on one surface or both surfaces of the negative electrode current collector.

The negative electrode mixture contains a negative electrode active material as an essential component, and can contain a binder, a conductive agent, a thickener, and the like, as optional components. For the negative electrode active material, the above-described negative electrode active material (composite particles) including a lithium silicate phase and a silicon phase is used.

The negative electrode active material preferably further includes a carbon material that electrochemically absorbs and releases lithium ions. The composite particles expand and contract in volume associated with charging and discharging. Therefore, when the proportion thereof in the negative electrode active material is increased, a contact failure tends to occur associated with charging and discharging, between the negative electrode active material and the negative electrode current collector. However, using the composite particles and a carbon material in combination makes it possible to achieve excellent cycle characteristics, while imparting a high capacity of the silicon particles to the negative electrode. In view of achieving a higher capacity and improved cycle characteristics, the proportion of the carbon material in the total of the silicon-containing material and the carbon material is preferably 98 mass% or less, more preferably 70 mass% or more and 98 mass% or less, further more preferably 75 mass% or more and 95 mass% or less.

Examples of the carbon material include graphite, graphitizable carbon (soft carbon), and non-graphitizable carbon (hard carbon). In particular, preferred is graphite, in terms of its excellent stability during charging and discharging and small irreversible capacity. The graphite means a material having a graphite-like crystal structure, examples of which include natural graphite, artificial graphite, and graphitized mesophase carbon particles. The carbon material may be used singly or in combination of two or more kinds.

Examples of the negative electrode current collector include a non-porous conductive substrate (e.g., metal foil) and a porous conductive substrate (e.g., mesh, net, punched sheet). The negative electrode current collector may be made of, for example, stainless steel, nickel, a nickel alloy, copper, or a copper alloy. The negative electrode current collector may have any thickness. In view of the balance between high strength and lightweight of the negative electrode, the thickness is preferably 1 to 50 µm, more preferably 5 to 20 µm.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, methyl polyacrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives (e.g., cellulose ethers), such as carboxymethyl cellulose (CMC) and modified products thereof (including salts such as Na salts), and methyl cellulose; saponificated products of polymers having vinyl acetate units, such as polyvinyl alcohol; and polyethers (e.g., polyalkylene oxide, such as polyethylene oxide). The thickener may be used singly or in combination of two or more kinds.

Examples of the dispersion medium include: water; alcohols, such as ethanol; ethers, such as tetrahydrofuran; amides, such as dimethylformamide; N-methyl-2-pyrrolidone (NMP); and a mixed solvent of these.

### [Positive electrode]

The positive electrode may include a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, and drying the slurry. The dry applied film may be rolled as needed. The positive electrode mixture layer may be formed on one surface or both surfaces of the positive electrode current collector. The positive electrode mixture can contain a positive electrode active material as an essential component, and can contain a binder, a conductive agent, and the like as optional components. The dispersion medium of the positive electrode slurry may be NMP or the like.

The positive electrode active material may be, for example, a lithium-containing composite oxide. Examples thereof include LiₐCoO₂, LiₐNiO₂, LiₐMnO₂, LiₐCo_{b}N_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value a representing the molar ratio of lithium is subjected to increase and decrease during charging and discharging.

In particular, preferred is a lithium-nickel composite oxide represented by LiₐNi_{b}Me_{1-b}O₂, where Me is at least one selected from the group consisting of Mn, Co, and Al, 0 < a ≤ 1.2, and 0.3 ≤ b ≤ 1. In view of achieving a higher capacity, b preferably satisfies 0.85 ≤ b ≤ 1. In view of the stability of the crystal structure, more preferred is LiₐNi_{b}Co_{c}Al_{d}O₂ containing Co and Al as elements represented by Me, where 0 < a ≤ 1.2, 0.85 ≤ b < 1, 0 < c < 0.15, 0 < d ≤ 0.1, and b+c+d = 1.

The binder and the conductive agent may be like those exemplified for the negative electrode. The conductive agent may be graphite, such as natural graphite and artificial graphite.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Electrolyte]

The electrolyte contains a solvent, and a lithium salt dissolved in the solvent. The concentration of the lithium salt in the electrolyte is preferably, for example, 0.5 mol/L or more and 2 mol/L or less. By controlling the lithium salt concentration within the above range, an electrolyte having excellent ion conductivity and moderate viscosity can be obtained. The lithium salt concentration, however, is not limited to the above.

The solvent may be aqueous or non-aqueous. Examples of the non-aqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL) and γ-valerolactone (GVL). The chain carboxylic acid esters are exemplified by methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

Examples of the lithium salt include: LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCI, LiBr, Lil, borates, and imides. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Preferred among them is LiPF₆. LiPF₆ is likely to form a passivation film on a surface of a constituent member of a battery, such as a positive electrode current collector. The passivation film can protect the above-described members. The lithium salt may be used singly or in combination of two or more kinds.

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

In an exemplary structure of the secondary battery, an electrode group formed by winding the positive electrode and the negative electrode with the separator interposed therebetween is housed together with the electrolyte in an outer body. The wound-type electrode group may be replaced with a different form of the electrode group, for example, a stacked-type electrode group formed by stacking the positive electrode and the negative electrode with the separator interposed therebetween. The secondary battery may be in any form, such as cylindrical type, prismatic type, coin type, button type, or laminate type.

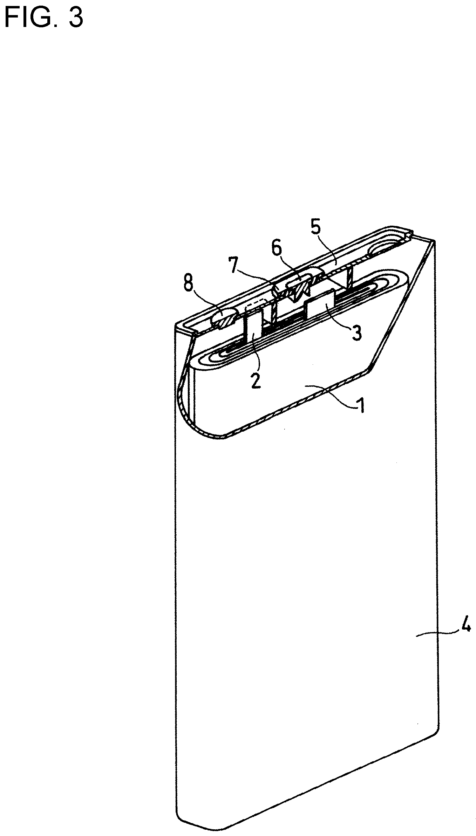

In the following, a structure of a prismatic secondary battery which is an example of a secondary battery according to the present disclosure will be described with reference to FIG. 3. FIG. 3 is a partially cut-away schematic oblique view of a secondary battery according to an embodiment of the present disclosure.

The battery includes a bottomed prismatic battery case 4, and an electrode group 1 and a non-aqueous electrolyte housed in the battery case 4. The electrode group 1 has a long negative electrode, a long positive electrode, and a separator interposed therebetween and preventing them from directly contacting with each other. The electrode group 1 is formed by winding the negative electrode, the positive electrode, and the separator around a flat plate-like winding core, and then removing the winding core.

A negative electrode lead 3 is attached at its one end to the negative electrode current collector of the negative electrode, by means of welding or the like. The negative electrode lead 3 is electrically connected at its other end to a negative electrode terminal 6 disposed at a sealing plate 5, via a resin insulating plate. The negative electrode terminal 6 is electrically insulated from the sealing plate 5 by a resin gasket 7. A positive electrode lead 2 is attached at its one end to the positive electrode current collector of the positive electrode, by means of welding or the like. The positive electrode lead 2 is electrically connected at its other end, via the insulating plate, to the back side of the sealing plate 5. In other words, the positive electrode lead 2 is electrically connected to the battery case 4 serving as a positive electrode terminal. The insulating plate insulates the electrode group 1 from the sealing plate 5, and insulates the negative electrode lead 3 from the battery case 4. The sealing plate 5 is fitted at its periphery to the opening end of the battery case 4, and the fitted portion is laser-welded. In this way, the opening of the battery case 4 is sealed with the sealing plate 5. The injection inlet for non-aqueous electrolyte provided in the sealing plate 5 is closed with a sealing plug 8.

The present disclosure will be specifically described below with reference to Examples and Comparative Examples. It is to be noted, however, the present invention is not limited to the following Examples.

### [Preparation of negative electrode active material (composite particles)]

### <Examples 1 to 5 and Comparative Example 1>

### [First step]

Silicon dioxide and a compound containing an element X were mixed, and the resulting mixture was baked at 950 °C for 10 hours. In this way, a silicate containing the element X was obtained.

The element X is selected from the group consisting of Li, Ca, B, Al, and La, and contains at least Li. As the compound containing the element X, a carbonate, a hydroxide or an oxide of the element X (Li₂CO₃, CaCO₃, H₃BO₃, Al(OH)₃, La₂O₃) was used for each Example. The compounds containing the element X were each mixed in a mixing ratio that gives a molar fraction as shown in Table 1 when converted into an oxide, and the mixture was baked, to obtain a lithium silicate. The resulting lithium silicate was pulverized to have an average particle diameter of 10 µm.

### [Second step]

The silicate containing the element X and a raw material silicon (3N, average particle diameter: 10 µm) were mixed in a mass ratio as shown in Table 1.

The mixture was placed in a pot (made of SUS, volume: 500 mL) of a planetary ball mill (P-5, available from Fritsch Co., Ltd.), together with 24 SUS balls (diameter: 20 mm). In the pot with the lid closed, the mixture was pulverized at 200 rpm for 50 hours in an inert atmosphere.

Next, the powdered mixture was taken out from the pot in an inert atmosphere, which was then baked at 600 °C for 4 hours, in an inert atmosphere, with a pressure applied by a hot press, to give a sintered body of the mixture (a composite intermediate). The resulting composite intermediate was pulverized, and the pulverized product was classified using a jet mill, to have an average particle diameter as shown in Table 1. Particles of the composite intermediate were thus obtained.

### [Third step]

The particles of the composite intermediate were then subjected to heat treatment at 600 °C for 5 hours in an inert atmosphere.

### [Fourth step]

Next, coal pitch (MCP250, available from JFE Chemical Corporation) and the powder after heat treatment were mixed in a weight ratio of 5:100 in a stream mill. The mixture was baked at 800 °C for 5 hours in an inert atmosphere, to form a conductive layer by coating the surface of the composite particles with a conductive carbon. Negative electrode active materials (composite particles) a1 to a5 were thus obtained.

In addition, without performing heat treatment in the third step, in the fourth step, in a similar manner to for a1 to a5, the particle surface of the composite intermediate was coated with a conductive carbon, to form a conductive layer, and a negative electrode active material (composite particles) b1 was obtained.

### <Comparative Example 2>

A raw material prepared by mixing 70 parts by mass of silicon dioxide relative to 30 parts by mass of metal silicon was placed in a reaction furnace, and vaporized at 1400 °C in a 100 Pa vacuum atmosphere, to allow a vaporized material to be deposited on an adsorption plate. After the deposited material was sufficiently cooled down, the deposited material was taken out from the reactor and pulverized with a ball mill, to produce particles of a silicon compound (SiOₓ where x = 1.4) having an average particle diameter of 5 µm. This was followed by pyrolytic CVD using methane gas as a raw material performed at 1100 °C for 5 hours, to form a carbon coating on the above particles. A negative electrode active material (composite particles) b2 was thus obtained. The carbon coating was controlled such that the amount of coating was 5 parts by mass, relative to 100 parts by mass of the silicon compound powder.

The negative electrode active materials (composite particles) a1 to a5, and, b1 and b2 were subjected to X-ray diffractometry. The results confirmed that a crystalline phase of La₂Si₂O₇ was formed in the negative electrode active material a5. On the other hand, no diffraction peak belonging to La₂Si₂O₇ was observed in the negative electrode active materials a1 to a4, and, b1 and b2.

Table 1 below shows a list of the average particle diameter of the negative electrode active material, the contents of the silicon particles and the lithium silicate phase in the second step, the mixing ratio of each compound in the first step, and the presence or absence of the crystalline phase of La₂Si₂O₇ in the negative electrode active materials a1 to a5, and, b1 and b2.

### [Production of negative electrode]

The composite particles and graphite were mixed in a mass ratio of 5:95, which was used as a negative electrode active material. The negative electrode active material, sodium carboxymethyl cellulose (CMC-Na), and styrene-butadiene rubber (SBR) were mixed in a mass ratio of 97.5:1:1.5, to which water was added. The mixture was stirred in a mixer (TK. HIVIS MIX, available from PRIMIX Corporation), to prepare a negative electrode slurry. Next, the negative electrode slurry was applied onto copper foil, so that the mass of a negative electrode mixture per 1 m² of the copper foil was 190 g. The applied film was dried, and then rolled, to produce a negative electrode with a negative electrode mixture layer having a density of 1.5 g/cm³ formed on both surfaces of the copper foil.

### [Production of positive electrode]

Lithium cobaltate, acetylene black, and polyvinylidene fluoride were mixed in a mass ratio of 95:2.5:2.5, to which N-methyl-2-pyrrolidone (NMP) was added. The mixture was stirred in a mixer (TK. HIVIS MIX, available from PRIMIX Corporation), to prepare a positive electrode slurry. Next, the positive electrode slurry was applied onto aluminum foil. The applied film was dried, and then rolled, to give a positive electrode with a positive electrode mixture layer having a density of 3.6 g/cm³ formed on both surfaces of the aluminum foil.

### [Preparation of electrolyte]

LiPF₆ was dissolved at a concentration of 1.0 mol/L in a mixed solvent containing ethylene carbonate (EC) and diethyl carbonate (DEC) in a volume ratio of 3:7, to prepare a non-aqueous electrolyte.

### [Fabrication of secondary battery]

The positive electrode and the negative electrode, with a tab attached to each electrode, were wound spirally with a separator interposed therebetween such that each tab was positioned at the outermost layer, thereby to form an electrode group. The electrode group was inserted into an outer body made of aluminum laminated film and dried under vacuum at 105 °C for two hours. Thereafter, the non-aqueous electrolyte was injected, and the opening of the outer body was sealed. A battery was thus fabricated.

With the composite particles a1 to a5, b1, and b2 obtained in the above production of a negative electrode, batteries A1 to A5 according to Examples 1 to 5 and batteries B1 and B2 according to Comparative Examples 1 and 2 were fabricated, respectively. The obtained batteries were each subjected to the following cycle test.

### [Cycle test]

### <Charging>

A constant-current charging was performed at a current of 1 It (800 mA) until the voltage reached 4.2 V, and then a constant-voltage charging was performed at a voltage of 4.2 V until the current reached 1/20 It (40 mA).

### <Discharging>

A constant-current discharging was performed at 1 It (800 mA) until the voltage reached 2.75 V.

The rest time between charging and discharging was 10 minutes. The charging and discharging were performed in a 25 °C environment.

For each battery, the discharge capacity at the 1st cycle to the charge capacity at the 1st cycle was measured as an initial charge-discharge efficiency. In addition, for each battery, the ratio of the discharge capacity at the 100th cycle to the discharge capacity at the 1st cycle was measured as a cycle capacity retention rate.

The evaluation results are shown in Table 2. In Table 2, the initial charge-discharge efficiency and the cycle retention rate are each represented by a relative value, relative to those of the battery A1 which are each taken as 100.

Furthermore, the battery in a discharged state after subjected to one cycle was disassembled, and the negative electrode mixture layer was taken out. One particle of the negative electrode active material was selected and analyzed by electron diffractometry, to observe the presence or absence of a diffraction image belonging to the silicon phase and/or the lithium silicate phase and its shape. The obtained electron diffraction images are also described in Table 2.

**[Table 1]**

| Negative electrode active material | Average particle diameter (µm) | Content in composite particles (mass%) | | Lithium silicate phase (or silicon oxide phase) | | | | | | La₂Si₂O₇ crysta-Iline phase |
|---|---|---|---|---|---|---|---|---|---|---|
| | | Silicon particles | Lithium silicate phase (or silicon oxide phase) | Compound mixing ratio (molar fraction) | | | | | | |
| | | | | SiO₂ | Li₂O | CaO | B₂O₃ | Al₂O₃ | La₂O₃ | |
| a1 | 8 | 56 | 44 | 66 | 34 | | | | | Absent |
| a2 | 6 | 56 | 44 | 66 | 34 | | | | | Absent |
| a3 | 4 | 56 | 44 | 66 | 34 | | | | | Absent |
| a4 | 4 | 60 | 40 | 75 | 25 | | | | | Absent |
| a5 | 4 | 60 | 40 | 70 | 20 | 1 | 2 | 4 | 3 | Present |
| b1 | 12 | 50 | 50 | 66 | 34 | | | | | Absent |
| b2 | 12 | 30 | 70 | 100 | | | | | | Absent |

**[Table 2]**

| | Battery | Negative electrode active material | Electron diffraction image | | Initial charge-discharge efficiency (index) | Cycle capacity retention rate (index) |
|---|---|---|---|---|---|---|
| | | | Silicon phase | Lithium silicate phase | | |
| Ex. 1 | A1 | a1 | Spot | Ring-shaped | 100 | 100 |
| Ex. 2 | A2 | a2 | Spot | Spot | 102 | 101 |
| Ex. 3 | A3 | a3 | Spot | Spot | 102 | 102 |
| Ex. 4 | A4 | a4 | Spot | Spot | 105 | 103 |
| Ex. 5 | A5 | a5 | Spot | Spot | 105 | 103 |
| Com. Ex. 1 | B1 | b1 | Ring-shaped | Ring-shaped | 97 | 98 |
| Com. Ex. 2 | B2 | b2 | Ring-shaped | Absent | 85 | 98 |

In the batteries A1 to A5 of Examples 1 to 5 in which the average particle diameter of the negative electrode active material was set to 8 µm or less, a high initial charge-discharge efficiency was obtained, as compared to in the batteries B1 and B2 in which the average particle diameter of the negative electrode active material was set to a value exceeding 8 µm. In the batteries A1 to A5, a high value was obtained also for the cycle capacity retention rate.

In batteries A2 to A5, the improvements in the initial charge-discharge efficiency and the cycle capacity retention rate were remarkable, even as compared with those in the battery A1. This is presumably because, as indicated by a spot image belonging to the lithium silicate observed in the electron diffraction image of the negative electrode active material, fine crystals of lithium silicate were dispersed in the lithium silicate phase.

### [Industrial Applicability]

A secondary battery according to the present disclosure is useful as a main power source for mobile communication equipment, portable electronic equipment, and other similar devices.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 11: composite particle
- 12: lithium silicate phase
- 13: silicon particle
- 14: crystalline phase of rare-earth element silicate
- 15: conductive layer
- 16: silicon phase

## Claims

1. A negative electrode active material for a secondary battery, comprising:
a lithium silicate phase; and a silicon phase dispersed in the lithium silicate phase, wherein
an electron diffraction image of the negative electrode active material obtained using a transmission electron microscope has a spot image, and
an average particle diameter of the negative electrode active material is 8 µm or less.

2. The negative electrode active material for a secondary battery according to claim 1, wherein, a content of the silicon phase in the negative electrode active material is 50 mass% or more.

3. The negative electrode active material for a secondary battery according to claim 1 or 2, wherein the silicon phase is formed in a network shape.

4. The negative electrode active material for a secondary battery according to any one of claims 1 to 3, wherein
the negative electrode active material includes a compound A represented by a general formula: M₂Si₂O₇, where
the M represents a rare-earth element.

5. The negative electrode active material for a secondary battery according to claim 4, wherein the rare-earth element includes lanthanum.

6. A secondary battery, comprising:
a positive electrode; a negative electrode; and an electrolyte, wherein
the negative electrode includes the negative electrode active material for a secondary battery of any one of claims 1 to 5.
